# EUROPÄISCHE PATENTSCHRIFT

(11) **EP 4 232 782 B1**
(45) Veröffentlichungstag und Bekanntmachung des Hinweises auf die Patenterteilung: **29.10.2025**
(21) Anmeldenummer: 21783213.8
(22) Anmeldetag: 23.09.2021
(51) Int. Cl.: G01F 1/84

(54) **CORIOLIS-MESSAUFNEHMER UND CORIOLIS-MESSGERÄT**
CORIOLIS MEASURING SENSOR, AND CORIOLIS MEASURING DEVICE
CAPTEUR DE MESURE À EFFET CORIOLIS ET APPAREIL DE MESURE À EFFET CORIOLIS

(30) Priorität: 26.10.2020 DE 102020128094
(43) Veröffentlichungstag der Anmeldung: 30.08.2023
(73) Patentinhaber: Endress+Hauser Flowtec AG, 4153 Reinach (CH)
(72) Erfinder: ZHU, Hao, 85354 Freising (DE); BITTO, Ennio, 4147 Aesch (CH); ECKERT, Gerhard, 79639 Grenzach-Wyhlen (DE)
(74) Vertreter: Endress + Hauser Group Services (Deutschland) AG+Co. KG
(86) Internationale Anmeldenummer: PCT/EP2021/076257
(87) Internationale Veröffentlichungsnummer: WO 2022/089852

(56) Entgegenhaltungen:
- DE-A1- 102005 059 070
- US-A1- 2012 192 658
- US-A1- 2015 276 451
- US-A1- 2019 242 738

## Beschreibung

Die Erfindung betrifft ein Coriolis-Messaufnehmer sowie ein Coriolis-Messgerät mit einem Coriolis-Messaufnehmer zum Erfassen einer Eigenschaft eines in Messrohren des Messaufnehmers befindlichen Medium. Medieneigenschaften von Interesse sind dabei üblicherweise eine Dichte oder ein Massedurchfluss des Mediums.

Bei Coriolis-Messgeräten wird ausgenutzt, dass durch einen Erreger erzeugte Messrohrschwingungen durch Medieneigenschaften beeinflusst werden. Durch Sensoren erzeugte Messsignale der Schwingungen können ausgewertet werden, um gewollte Informationen zu den Medieneigenschaften zu gewinnen. Um die Messrohrschwingungen zu definieren, werden dabei üblicherweise Fixierelemente eingerichtet, welche Schwingungsknoten definieren. Bei Coriolis-Messaufnehmern mit einem Messrohrpaar ist das üblicherweise mit mindestens zwei Fixierelementen pro Schwingungsknoten bewerkstelligt, siehe beispielsweise die DE102005046319A1. US 2019/242738 A1 offenbart einen Coriolis-Durchflussmesser mit zwei Koppelelementen, die zur Definition von Schwingungsknoten dienen und sich in den äußeren Messrohrbögen befinden. Am inneren Messrohrbogen befinden sich mehrere Versteifungselemente.

Diese Fixierelemente begrenzen jedoch einen Schwingungsbereich des Messrohrs und somit eine Messleistung des Coriolis-Messgeräts.

Aufgabe der Erfindung ist es daher, den Schwingungsbereich des Messrohrs zu erweitern.

Die Aufgabe wird gelöst durch einen Coriolis-Messaufnehmer gemäß dem unabhängigen Anspruch 1 sowie durch ein Coriolis-Messgerät gemäß dem unabhängigen Anspruch 7.

Ein erfindungsgemäßer Coriolis-Messaufnehmer eines Coriolis-Messgeräts zum Messen einer Eigenschaft eines durch eine Rohrleitung strömenden Mediums umfasst: zumindest ein Paar Messrohre zum Führen des Mediums mit jeweils einem Einlauf, einem Auslauf, einer ein Messrohrlumen einschließenden Messrohrwandung, sowie jeweils einer Messrohrmittenlinie;
zumindest einen Erreger zum Erzeugen von Messrohrschwingungen sowie einen einlaufseitigen ersten Sensor und einen auslaufseitigen zweiten Sensor zum Erfassen von Messrohrschwingungen;
zwei Sammler, welche dazu eingerichtet sind, das Medium aus der Rohrleitung aufzunehmen und auf die Messrohre zu verteilen oder das Medium aufzunehmen und in die Rohrleitung zu überführen,
wobei die Messrohre jeweils einen ersten äußeren Messrohrbogen und einen zweiten äußeren Messrohrbogen aufweisen, welche äußere Messrohrbögen jeweils eine Bogenlänge aufweisen,
pro Messrohrpaar jeweils eine erste Gruppe von Fixierelementen mit mindestens zwei Fixierelementen und eine zweite Gruppe von Fixierelementen mit mindestens zwei Fixierelementen, wobei die erste Gruppe im Bereich der ersten Messrohrbögen und die zweite Gruppe im Bereich der zweiten Messrohrbögen angeordnet ist, wobei die Gruppen von Fixierelementen jeweils dazu eingerichtet sind, einen Messrohrschwingungsknoten zu definieren, wobei die Fixierelemente jeweils die Messrohre des Messrohrpaars zueinander fixieren,
wobei die Fixierelemente entlang der Messrohrmittenlinie jeweils einen ersten Abstand zu einem äußeren Ende des jeweiligen Messrohrbogens aufweisen, welcher Abstand höchstens 0.7 Bogenlängen und insbesondere 0.5 Bogenlängen ist,
wobei die äußeren Messrohrbögen jeweils mindestens ein Versteifungselement aufweisen, wobei die Versteifungselemente jeweils zwischen den Gruppen von Fixierelementen angeordnet sind,
wobei die Versteifungselemente jeweils einen zweiten Abstand zu einem inneren Ende des jeweiligen Messrohrbogens aufweisen, wobei der zweite Abstand zumindest 0.1 Bogenlängen ist, wobei die Versteifungselemente jeweils an einem Messrohr angeordnet sind.

Durch die Begrenzung des ersten Abstands ist eine Ausdehnung eines Schwingungsbereichs vergrößert. Die Versteifungselemente begrenzen im Bereich des jeweiligen äußeren Messrohrbogens eine Abhängigkeit des Messrohrdurchmessers von einem Mediendruck.

Eine solche Abhängigkeit hat starke Auswirkungen auf eine Steifigkeit der Messrohre und somit auf die Schwingungseigenschaften des Messrohrs.

Die Kombination aus der Begrenzung des ersten Abstands sowie der Einrichtung von Versteifungselementen im Bereich der Messrohrbögen zwischen den Messrohrgruppen verbessert somit die Messleistung durch Vergrößerung des Schwingungsbereichs.

Die Messrohrmittenlinie ist eine Linie durch Mittelpunkte von Messrohrquerschnitten.

In einer Ausgestaltung weist der Messaufnehmer zumindest 2 Versteifungselemente pro Messrohrbogen auf.

Dadurch kann die Abhängigkeit des Messrohrdurchmessers vom Mediendruck weiter verringert werden.

In einer Ausgestaltung ist das Versteifungselement ringförmig oder folgt einer Ringform.

Das Versteifungselement umgreift also das jeweilige Messrohr zumindest teilweise und festigt einen Umfang des zugehörigen des Messrohrs.

In einer Ausgestaltung weist das Versteifungselement wie das Messrohr ein erstes Material auf oder ist aus diesem Material gefertigt.

Das erste Material ist dabei ein Metall, insbesondere ein Edelstahl, oder eine Keramik oder ein Kunststoff

In einer Ausgestaltung weist das Messrohr eine Messrohrwandstärke auf,
wobei das Versteifungselement einen Außenradius aufweist, welcher zumindest eine Messrohrwandstärke größer ist als ein Messrohrradius
   und/oder
wobei das Versteifungselement entlang der Messrohrmittenlinie eine Breite von mindestens 1 Millimeter und höchstens 15 Millimeter aufweist.

Auf diese Weise kann das Versteifungselement gegen einen Messrohrinnendruck wirken und einen in sehr guter Näherung konstant bleibenden Messrohrdurchmesser erzwingen.

In einer Ausgestaltung weisen die äußeren Messrohrbögen bezüglich der Messrohrmittenlinie jeweils einen Bogenradius von weniger als 5 Messrohrdurchmessern und/oder mindestens 2 Messrohrdurchmessern auf. Bei einer gegebenen Messrohrlänge beispielsweise festgelegt durch externe Vorgaben kann durch Begrenzung der Bogenradien ein Anteil der äußeren Messrohrbögen an einer Messrohrlänge begrenzt werden. Eine Mindestgröße stellt sicher, dass die Messrohre im Bereich der Messrohrbögen eine ausreichend hohe Qualität haben und keine Schäden durch den Prozess der Herstellung der Bögen davontragen.

In einer Ausgestaltung ist die zu bestimmende Medieneigenschaft ein Massedurchfluss oder eine Dichte.

Ein erfindungsgemäßes Coriolis-Messgerät umfasst einen erfindungsgemäßen Coriolis-Messaufnehmer und eine elektronische Mess-/Betriebsschaltung zum Betreiben des Erregers, zum Erfassen von Messsignalen der Sensoren sowie zum Bereitstellen von Messwerten der Medieneigenschaft.

Im Folgenden wird die Erfindung anhand von Ausführungsbeispielen beschrieben.
Fig. 1 zeigt ein beispielhaftes Coriolis-Messgerät;
Fig. 2 a) und 2 b) zeigen einen erfindungsgemäßen Coriolis-Messaufnehmer.

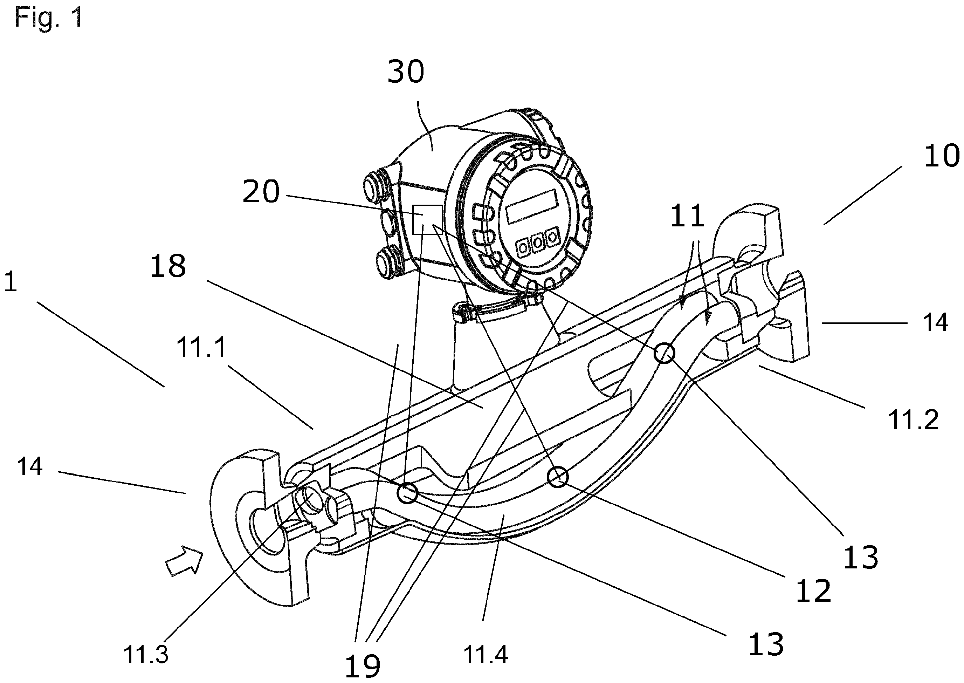

Fig. 1 zeigt ein beispielhaftes Coriolis-Messgerät 1 mit einem Coriolis-Messaufnehmer 10, einer elektronischen Mess-Betriebsschaltung 20 und einem Gehäuse 30 zum Behausen der elektronischen Mess-/Betriebsschaltung. Der Coriolis-Messaufnehmer weist ein Paar Messrohre 11 mit jeweils einem Einlauf 11.1 und jeweils einem Auslauf 11.2 auf. An beiden Enden der Messrohre ist jeweils ein Sammler 14 angeordnet welche dazu eingerichtet sind, das Medium aus einer Rohrleitung auf die Messrohre zu verteilen bzw. aus den Messrohren in die Rohrleitung überzuführen. Ein Erreger 12 ist dazu eingerichtet, Messrohrschwingungen zu erzeugen, und Sensoren 13 sind dazu eingerichtet, die Messrohrschwingungen zu erfassen. Die elektronische Mess-/Betriebsschaltung ist zum Betreiben des Erregers, zum Erfassen von Messsignalen der Sensoren sowie zum Bereitstellen von Messwerten der Medieneigenschaft eines durch ein durch eine Messrohrwandung 11.4 gebildetes Messrohrlumen 11.3 strömenden Mediums eingerichtet. Der Coriolis-Messaufnehmer weist einen Trägerkörper 18 zum Tragen der Messrohre auf.

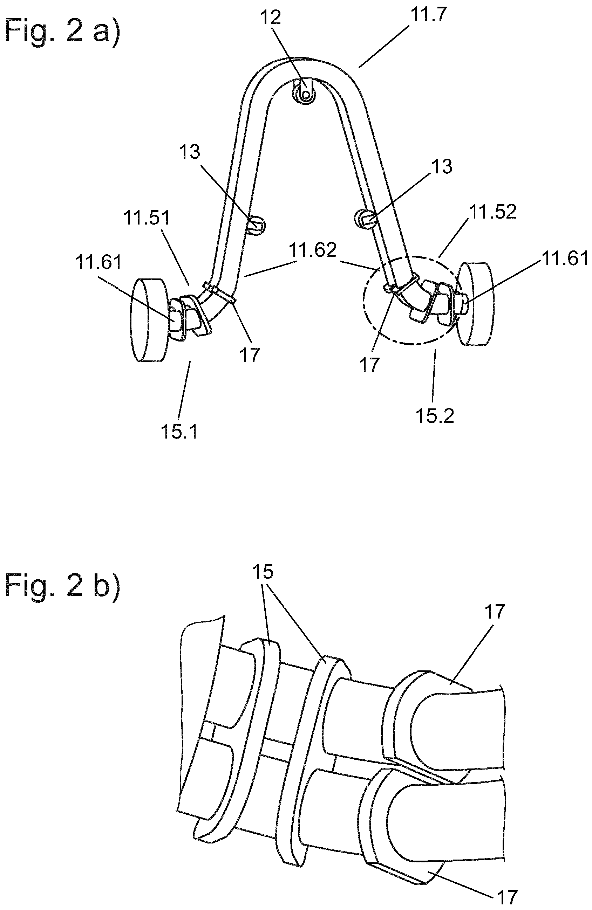

Fig. 2 a) zeigt eine erfindungsgemäße Ausgestaltung eines Paars von Messrohren eines erfindungsgemäßen Coriolis-Messaufnehmers und Fig 2 b) eine Ausschnittsvergrößerung des mit einem Kreis markierten Bereichs von Fig. 2 a). Die Messrohre weisen jeweils einen ersten äußeren Messrohrbogen 11.51 und einen zweiten äußeren Messrohrbogen 11.52 auf, wobei die äußeren Messrohrbögen jeweils ein äußeres Ende 11.61 und ein inneres Ende 11.62 aufweisen.

Der Coriolis-Messaufnehmer weist eine erste Gruppe Fixierelemente 15.1 mit zwei Fixierelementen 15 sowie eine zweite Gruppe Fixierelemente 15.2 mit zwei Fixierelementen 15 auf, welche Gruppen von Fixierelementen dazu eingerichtet sind, bei jeweils einem äußeren Messrohrbogen einen Schwingungsknotenpunkt zu definieren.

Die äußeren Messrohrbögen weisen jeweils eine Bogenlänge auf, wobei erfindungsgemäß die Fixierelemente zum zugehörigen äußeren Ende jeweils einen ersten Abstand von höchstens 0.7 Bogenlängen und insbesondere höchsten 0.5 Bogenlängen aufweisen. Dadurch wird eine Schwingungsausdehnung des Messrohrs vergrößert. Der Coriolis-Messaufnehmer kann dabei auch mehr als zwei Fixierelemente 15 pro Gruppe 15.1, 15.2 aufweisen.

Erfindungsgemäß ist des Weiteren pro äußerem Messrohrbogen jeweils ein Versteifungselement 17 eingerichtet, welches das Messrohr gegen Mediendruck abstützt und verstärkt. Dadurch ist im Bereich des jeweiligen äußeren Messrohrbogens eine Abhängigkeit des Messrohrdurchmessers von einem Mediendruck reduziert und somit eine Steifigkeit des Messrohrs stabilisiert. Es können jedoch auch mehr als nur ein Versteifungselement 17 pro äußerem Messrohrbogen 11.51, 11.52 eingerichtet sein. Die Versteifungselemente weisen jeweils einen zweiten Abstand zum zugehörigen inneren Ende 11.62 des jeweiligen Messrohrbogens aufweisen, wobei der zweite Abstand zumindest 0.1 Bogenlängen ist, wobei die Versteifungselemente jeweils an einem Messrohr angeordnet sind.

In einer Ausgestaltung weisen die äußeren Messrohrbögen bezüglich der Messrohrmittenlinie jeweils einen Bogenradius von weniger als 5 Messrohrdurchmessern und/oder mindestens 2 Messrohrdurchmessern auf. Bei einer gegebenen Messrohrlänge beispielsweise festgelegt durch externe Vorgaben kann durch Begrenzung der Bogenradien ein Anteil der äußeren Messrohrbögen an einer Messrohrlänge begrenzt werden. Eine Mindestgröße stellt sicher, dass ausreichend Platz für die Einrichtung der Fixierelemente sowie der Versteifungselemente ist.

Die Messrohre können wie hier gezeigt zwischen den äußeren Messrohrbögen einen zentralen Messrohrbogen 11.7 aufweisen, welcher mittels zweier gerader Abschnitte mit den äußeren Messrohrbögen verbunden ist.

Falls der Messaufnehmer mehr als ein Messrohrpaar umfasst, dann können Fixierelemente jeweils ein paar Messrohre oder auch mehr als ein Paar Messrohre fixieren.

In einer Ausgestaltung ist das Versteifungselement ringförmig oder folgt einer Ringform.

Das Versteifungselement umgreift also das jeweilige Messrohr zumindest teilweise und festigt einen Umfang des jeweiligen Messrohrs. In einer Ausgestaltung weist das Versteifungselement wie das Messrohr ein erstes Material auf oder ist aus diesem Material gefertigt. Das erste Material ist dabei ein Metall, insbesondere ein Edelstahl, oder eine Keramik oder ein Kunststoff.

In einer Ausgestaltung weist das Messrohr eine Messrohrwandstärke auf, wobei das Versteifungselement einen Außenradius aufweist, welcher zumindest eine Messrohrwandstärke größer ist als ein Messrohrradius und/oder
wobei das Versteifungselement entlang der Messrohrmittenlinie eine Breite von mindestens 1 Millimeter und höchstens 15 Millimeter aufweist.

Auf diese Weise kann das Versteifungselement gegen einen Messrohrinnendruck wirken und einen in sehr guter Näherung konstant bleibenden Messrohrdurchmesser erzwingen.

Zwischen den Sammlern und den äußeren Enden der äußeren Messrohrbögen kann ein gerader Messrohrabschnitt angeordnet sein. Dadurch ist sichergestellt, dass der Sammler mit einem Messrohrabschnitt mit kreisförmigem Querschnitt verbunden wird. Der Prozess des Biegens der Messrohrbögen verursacht lokal kleine Abweichungen von einer kreisrunden Form von Messrohrquerschnitten. Dies kann für ein Verschweißen von Sammler und Messrohr nachteilhaft sein.

### Bezugszeichenliste

- 1: Coriolis-Messgerät
- 10: Coriolis-Messaufnehmer
- 11: Messrohr
- 11.1: Einlauf
- 11.2: Auslauf
- 11.3: Messrohrlumen
- 11.4: Messrohrwandung
- 11.51: erster äußerer Messrohrbogen
- 11.52: zweiter äußerer Messrohrbogen
- 11.53: Bogenlänge
- 11.61: äußeres Ende
- 11.62: inneres Ende
- 11.7: zentraler Messrohrbogen
- 12: Erreger
- 13: Sensor
- 14: Sammler
- 15: Fixierelement
- 15.1: erste Gruppe
- 15.2: zweite Gruppe
- 17: Versteifungselement
- 18: Trägerkörper
- 19: elektrische Verbindungsleitungen
- 20: elektronische Mess-/Betriebsschaltung
- 30: Gehäuse

## Patentansprüche

1. Coriolis-Messaufnehmer (10) eines Coriolis-Messgeräts (1) zum Messen einer Eigenschaft eines durch eine Rohrleitung strömenden Mediums, welcher Coriolis-Messaufnehmer umfasst:
zumindest ein Paar Messrohre (11) zum Führen des Mediums mit jeweils einem Einlauf (11.1) und einem Auslauf (11.2), eine ein Messrohrlumen (11.3) einschließende Messrohrwandung (11.4), sowie jeweils eine Messrohrmittenlinie, wobei die Messrohre jeweils einen ersten äußeren Messrohrbogen (11.51) und einen zweiten äußeren Messrohrbogen (11.52) aufweisen, welche äußere Messrohrbögen jeweils eine Bogenlänge aufweisen;
zumindest 2 Versteifungselemente (17) pro Messrohrbogen, wobei die Versteifungselemente jeweils an einem Messrohr angeordnet sind;
zwei Sammler (14), welche dazu eingerichtet sind, das Medium aus der Rohrleitung aufzunehmen und auf die Messrohre zu verteilen oder das Medium aufzunehmen und in die Rohrleitung zu überführen;
zumindest einen Erreger (12) zum Erzeugen von Messrohrschwingungen;
zumindest zwei Sensoren (13) zum Erfassen von Messrohrschwingungen;
sowie pro Messrohrpaar jeweils eine erste Gruppe von Fixierelementen (15.1) mit mindestens zwei Fixierelementen (15) und eine zweite Gruppe von Fixierelementen (15.2) mit mindestens zwei Fixierelementen (15), wobei die erste Gruppe im Bereich der ersten äußeren Messrohrbögen und die zweite Gruppe im Bereich der zweiten äußeren Messrohrbögen angeordnet ist, wobei die Gruppen von Fixierelementen jeweils dazu eingerichtet sind, einen Messrohrschwingungsknoten zu definieren, und wobei die Fixierelemente jeweils die Messrohre des Messrohrpaars zueinander fixieren,
wobei die Fixierelemente entlang der Messrohrmittenlinie jeweils einen ersten Abstand zu einem äußeren Ende (11.61) des jeweiligen Messrohrbogens aufweisen, welcher Abstand höchstens 0.7 Bogenlängen, insbesondere 0.5 Bogenlängen, ist,
wobei die Versteifungselemente jeweils zwischen den Gruppen von Fixierelementen angeordnet sind,
**dadurch gekennzeichnet, dass** die Versteifungselemente jeweils einen zweiten Abstand zu einem inneren Ende (11.62) des jeweiligen Messrohrbogens aufweisen, wobei der zweite Abstand zumindest 0.1 Bogenlängen ist.

2. Coriolis-Messaufnehmer nach Anspruch 1,
wobei das Versteifungselement (17) ringförmig ist oder einer Ringform folgt.

3. Coriolis-Messaufnehmer nach Anspruch 2,
wobei das Versteifungselement wie das Messrohr ein erstes Material aufweisen oder aus diesem Material gefertigt sind.

4. Coriolis-Messaufnehmer nach Anspruch 2 oder 3,
wobei das Messrohr eine Messrohrwandstärke aufweist,
wobei das Versteifungselement einen Außenradius aufweist, welcher zumindest eine Messrohrwandstärke größer ist als ein Messrohrradius
und/oder
wobei das Versteifungselement entlang der Messrohrmittenlinie eine Breite von mindestens 1 Millimeter und höchstens 15 Millimeter aufweist.

5. Coriolis-Messaufnehmer nach einem der vorigen Ansprüche,
wobei die äußeren Messrohrbögen (11.61, 11.62) bezüglich der Messrohrmittenlinie jeweils einen Bogenradius von weniger als 5 Messrohrdurchmessern und/oder mindestens 2 Messrohrdurchmessern aufweisen.

6. Coriolis-Messaufnehmer nach einem der vorigen Ansprüche,
wobei die Medieneigenschaft ein Massedurchfluss oder eine Dichte ist.

7. Coriolis-Messgerät (1) umfassend:
einen Coriolis-Messaufnehmer (10) nach einem der vorigen Ansprüche;
eine elektronische Mess-/Betriebsschaltung (20) zum Betreiben des Erregers (12), zum Erfassen von Messsignalen der Sensoren (13) sowie zum Bereitstellen von Messwerten der Medieneigenschaft;
ein Gehäuse (30) zum Behausen der elektronischen Mess-/Betriebsschaltung.

## Claims

1. A Coriolis measuring transducer (10) of a Coriolis measuring device (1) for measuring a property of a medium flowing through a pipeline, said Coriolis measuring transducer comprising:
At least one pair of measuring tubes (11) for conducting the medium, each with an inlet (11.1) and an outlet (11.2), a measuring tube wall (11.4) enclosing a measuring tube lumen (11.3), and a measuring tube center line in each case, wherein each measuring tube has a first outer measuring tube elbow (11.51) and a second outer measuring tube elbow (11.52), said outer measuring tube elbows each having an elbow length;
at least two stiffening elements (17) per measuring tube elbow, wherein each stiffening element is arranged on a measuring tube;
two collectors (14) which are configured to receive the medium emerging from the pipeline and to distribute it between the measuring tubes, or to receive the medium and to transfer it into the pipeline;
at least one exciter (12) for generating measuring tube oscillations; at least two sensors (13) for detecting measuring tube oscillations;
and a first group of fixing elements (15.1) with at least two fixing elements (15) and a second group of fixing elements (15.2) with at least two fixing elements (15) per pair of measuring tubes, wherein the first group is arranged in the area of the first outer measuring tube elbows and the second group is arranged in the area of the second outer measuring tube elbows, wherein each group of fixing elements is configured to define a measuring tube node, and wherein each fixing element fixes the measuring tubes of each pair of measuring tubes to each other;
wherein along the measuring tube center line each fixing element has a first distance from an outer end (11.61) of the respective measuring tube elbow, said distance being at most 0.7 elbow lengths, in particular 0.5 elbow lengths,
wherein the stiffening elements are arranged between each group of fixing elements,
**characterized in that** each stiffening element has a second distance from an inner end (11.62) of the respective measuring tube elbow, wherein the second distance is at least 0.1 elbow lengths.

2. The Coriolis measuring transducer as claimed in claim 1,
wherein the stiffening element (17) is annular or follows the shape of a ring.

3. The Coriolis measuring transducer as claimed in claim 2,
wherein the stiffening element and the measuring tube have a first material or are made from this material.

4. The Coriolis measuring transducer as claimed in claim 2 or 3, wherein the measuring tube has a measuring tube wall thickness,
wherein the stiffening element has an outer radius which is greater than a measuring tube radius by at least one measuring tube wall thickness,
and/or
wherein the stiffening element has a width of at least 1 millimeter and at most 15 millimeters along the measuring tube center line.

5. The Coriolis measuring transducer as claimed in one of the preceding claims,
wherein each outer measuring tube elbow (11.61, 11.62) has an elbow radius of less than five measuring tube diameters and/or at least two measuring tube diameters relative to the measuring tube center line.

6. The Coriolis measuring transducer as claimed in one of the preceding claims,
wherein the media property is a mass flow or a density.

7. A Coriolis measuring device (1) comprising:
A Coriolis measuring transducer (10) as claimed in one of the preceding claims;
an electronic measuring/operating circuit (20) for operating the exciter (12), for detecting measurement signals from the sensors (13), and for supplying measured values relating to the media property;
a housing (30) for housing the electronic measuring/operating circuit.

## Revendications

1. Capteur Coriolis (10) d'un débitmètre Coriolis (1) destiné à la mesure d'une caractéristique d'un produit s'écoulant à travers une conduite, lequel capteur Coriolis comprend :
au moins une paire de tubes de mesure (11) destinée à guider le produit, chacun des tubes présentant une entrée (11.1) et une sortie (11.2), une paroi de tube de mesure (11.4) comprenant un canal intérieur de tube de mesure (11.3), et chacun des tubes présentant une ligne médiane de tube de mesure, les tubes de mesure présentant chacun un premier coude de tube de mesure extérieur (11.51) et un deuxième coude de tube de mesure extérieur (11.52), lesquels coudes de tube de mesure extérieurs présentent chacun une longueur de coude ;
au moins 2 éléments de renfort (17) par coude de tube de mesure, les éléments de renfort étant disposés chacun sur un tube de mesure ;
deux collecteurs (14), lesquels sont conçus pour recevoir le produit de la conduite et le répartir sur les tubes de mesure ou pour recevoir le produit et le transférer dans la conduite ;
au moins un excitateur (12) destiné à générer des vibrations de tube de mesure ;
au moins deux capteurs (13) destinés à détecter des vibrations de tube de mesure ;
ainsi que, pour chaque paire de tubes de mesure, un premier groupe d'éléments de fixation (15.1) avec au moins deux éléments de fixation (15) et un deuxième groupe d'éléments de fixation (15. 2) avec au moins deux éléments de fixation (15), le premier groupe étant disposé dans la zone des premiers coudes de tube de mesure extérieurs et le deuxième groupe dans la zone des deuxièmes coudes de tube de mesure extérieurs, les groupes d'éléments de fixation étant respectivement conçus pour définir un nœud de vibration de tube de mesure, et les éléments de fixation fixant respectivement les tubes de mesure de la paire de tubes de mesure l'un par rapport à l'autre ;
les éléments de fixation présentant respectivement une première distance d'une extrémité extérieure (11.61) du coude de tube de mesure respectif, laquelle distance est au maximum de 0,7 longueur d'arc, notamment de 0,5 longueur d'arc,
les éléments de renfort étant respectivement disposés entre les groupes d'éléments de fixation,
**caractérisé en ce que** les éléments de renfort présentent respectivement une deuxième distance par rapport à une extrémité intérieure (11.62) du coude de tube de mesure respectif, la deuxième distance étant au moins de 0,1 longueur d'arc.

2. Capteur Coriolis selon la revendication 1,
pour lequel l'élément de renfort (17) est annulaire ou suit une forme annulaire.

3. Capteur Coriolis selon la revendication 2,
pour lequel l'élément de renfort ainsi que le tube de mesure présentent un premier matériau ou sont fabriqués dans ce matériau.

4. Capteur Coriolis selon la revendication 2 ou 3,
pour lequel le tube de mesure présente une épaisseur de paroi de tube de mesure,
pour lequel l'élément de renfort présente un rayon extérieur qui est au moins une épaisseur de paroi de tube de mesure supérieure à un rayon de tube de mesure
et/ou
pour lequel l'élément de renfort présente le long de la ligne médiane de tube de mesure une largeur d'au moins 1 millimètre et d'au plus 15 millimètres.

5. Capteur Coriolis selon l'une des revendications précédentes,
pour lequel les coudes de tube de mesure extérieurs (11.61, 11.62) présentent chacun, par rapport à la ligne médiane de tube de mesure, un rayon de courbure inférieur à 5 diamètres de tube de mesure et/ou au moins 2 diamètres de tube de mesure.

6. Capteur Coriolis selon l'une des revendications précédentes,
pour lequel la caractéristique du produit est un débit massique ou une densité.

7. Débitmètre Coriolis comprenant :
un capteur Coriolis (10) selon l'une des revendications précédentes ;
un circuit électronique de mesure/fonctionnement (20) destiné à faire fonctionner l'excitateur (12), à acquérir les signaux de mesure des capteurs (13) ainsi qu'à fournir des valeurs mesurées de la caractéristique du produit ;
un boîtier (30) destiné à loger le circuit électronique de mesure/fonctionnement.
